# EUROPÄISCHE PATENTSCHRIFT

(11) **EP 0 827 683 B1**
(45) Veröffentlichungstag und Bekanntmachung des Hinweises auf die Patenterteilung: **06.11.2002**
(21) Anmeldenummer: 97114151.0
(22) Anmeldetag: 16.08.1997
(51) Int. Cl.: A01D 34/68, F16H 7/12, A01D 34/76

(54) **Zugmittelgetriebe für ein Arbeitsgerät**
Belt transmission for a working tool
Transmission à courroie pour un instrument de travail

(30) Priorität: 05.09.1996 US 708568
(43) Veröffentlichungstag der Anmeldung: 11.03.1998
(73) Patentinhaber: DEERE & COMPANY, Moline, Illinois 61265-8098 (US)
(72) Erfinder: Kuhn, John Boyd, Rubicon, Wisconsin 53078 (US); Post, Timothy Milton, Portage, Wisconsin 53901 (US)
(74) Vertreter: Magin, Ludwig Bernhard

(56) Entgegenhaltungen:
- EP-A- 0 126 808
- US-A- 2 663 195
- US-A- 3 365 969
- US-A- 4 068 452
- US-A- 4 191 006
- US-A- 4 317 325

## Beschreibung

Die Erfindung bezieht sich auf ein Zugmittelgetriebe für ein Arbeitsgerät, insbesondere für einen an ein Fahrzeug anschließbaren Rasenmäher, mit wenigstens einem endlosen Zugmittel zum Antrieb mindestens eines Arbeitswerkzeugs, einer Antriebsriemenscheibe, mindestens einer jeweils einem Arbeitswerkzeug zugeordneten Riemenscheibe und mit einer Spannscheibe, die an einem Spannarm vorgesehen ist, der derart schwenkbar gelagert ist, dass er in eine erste Richtung, in der das Zugmittel spannbar ist, und in eine zweite Richtung verschwenkbar ist, in der das Zugmittel entspannbar ist, und mit einer Druckfeder, deren Rückstellkraft in die erste Richtung wirkt.

Gewerblich einsetzbare und mit Sichelmessern ausgerüstete Rasenmäher haben in der Regel eine relativ große Arbeitsbreite. Meistens sind mehrere Sichelmesser in einem nach unten offenen Mähwerksgehäuse angeordnet, auf dessen Oberseite sich Riemenscheiben befinden, die zum Antrieb der Messer über ein Zugmittel in Form eines endlosen Riemens dienen. Das Mähwerksgehäuse selbst kann zwischen den Achsen eines Klein- oder Rasentraktors, vor dessen Vorderachse oder hinter dessen Hinterachse angeordnet sein. Es kann auch angehängt werden. Von einer Kraftquelle am Traktor aus kann das Zugmittel über die Antriebsriemenscheibe angetrieben werden. Damit das Zugmittel insbesondere bei einem Einsatz in nassem Gut aber auch sonst nicht durchrutscht, muss der Riemen eine entsprechende Vorspannung haben, was in der Regel über eine unter der Wirkung einer Feder stehende Spannvorrichtung erfolgt (US-A-4 813 215). Die Feder zieht an einem Spannarm, der dann seinerseits eine Spannrolle gegen den Riemen drückt. Normalerweise sind die Enden derartiger Zugfedern als Haken und / oder Ösen ausgebildet, die relativ schnell ermüden und ersetzt werden müssen, da die Federn sich bei einem Einsatz ständig spannen und entspannen. Der Grund hierfür sind die bei einem normalen Einsatz auftretenden Vibrationen, aber auch das Auftreffen eines Mähmessers auf ein Hindernis oder das Anlegen einer Bremse an die Antriebsriemenscheibe, wenn beispielsweise der Fahrer seinen Fahrerplatz verlässt. Das Hin- und Herschwingen des Spannarms kann in Extremfällen zum Abspringen des Riemens führen. Jedenfalls treten immer unerwünschte Geräusche auf. Aber auch der Riemen selbst wird sich nach längeren Einsatzzeiten dehnen. Um dann die größere Riemenlänge auffangen zu können, ziehen sich die Federn stärker zusammen mit der Folge, dass eine andere Vorspannung ausgeübt wird.

Auch das in der US-A-4 346 547 gezeigte Zugmittelgetriebe findet an dem Mähwerk eines Rasentraktors Verwendung. Im einzelnen ist auf dem Mähwerksgehäuse ein Stützteil ortsfest angeordnet. Dieser Stützteil ist an dem Spannarm über einen Schraubenbolzen angeschlossen. Durch Anziehen des Schraubenbolzens wird der Spannarm in seine erste Richtung verschwenkt und das Zugmittel wird gespannt. Eine Feder ist nicht vorgesehen, und der Schraubenbolzen verhindert im normalen Einsatz eine Bewegung des Spannarms in die zweite Richtung bei der sich der Riemen entspannen könnte. Bei Ermüdungserscheinungen des Zugmittels, die sich in einem Dehnen bzw. Auslängen des Zugmittels ausdrücken, springt der Riemen von den zugehörigen Riemenscheiben ab, da der Schraubenbolzen nicht in der Lage ist, den Spannarm in der ersten Richtung zu verstellen. Ein Abspringen des Riemens ist aber nicht akzeptabel. In diesen Fällen bedeutet ein Abspringen des Riemens zusätzliche Standzeiten, da nach dem Anhalten der Maschine und dem Neuauflegen des Riemens noch der Schraubenbolzen neu eingestellt werden muss, damit der Riemen wieder eine Spannung hat, die sein Abspringen für einige Zeit verhindert.

Die gattungsgemäße US-A-2 663 195 zeigt ein Zugmittelgetriebe mit einer zwei Spannarme aufweisenden Spanneinrichtung. Die Spannarme sind gelenkig miteinander verbunden und tragen eine Spannrolle. Einer der Spannarme weist eine Druckfeder auf, welche derart angeordnet ist, dass bei unterschiedlichen Stellungen von Riemenscheiben des Zugmittelgetriebes eine gleichmäßige Spannung eines Zugriemens gewährleistet werden kann.

Die US-A-4,317,325 zeigt eine Spanneinrichtung für einen Taktriemen eines Rasenmähers. Ein Messerbalken bzw. eine ihn antreibende Riemenscheibe ist mit dem Mähwerk über eine schwenkbare Anschlußplatte verbünden, die durch eine einstellbare Druckfeder belastet wird.

In der US-A-4,191,008 wird eine Spanneinrichtung für ein Zugmittelgetriebe eines Schneidwerks gezeigt, welches der Kontur des Untergrund folgen kann. Ein Spannarm wird in einer Richtung durch eine Druckfeder belastet, welche in die andere Richtung in der Art einer Stange wirkt, so dass der Spannarm in dieser Richtung zusammen mit dem Schneidwerk verschwenken kann und eine gleichbleibende Spannung eines Zugmittels gewährleistet wird.

Eine. Zugmittelgetriebe, wie es in der US-A-4,068,452 vorgeschlagen wird, weist eine Spanneinrichtung mit einer auf ein Zugmittel über einen Schwenkhebel wirkenden Feder auf, wobei die Spanneinrichtung mittels eines Hebels in eine das Zugmittel belastende wie auch eine Stellung gebracht werden kann, in der das Zugmittel nicht gespannt ist.

Die mit der Erfindung zu lösende Aufgabe wird darin gesehen, zumindest einige der vorgenannten Nachteile zu vermeiden. Hierzu sieht die Erfindung eine Druckfeder vor, deren Rückstellkraft in die erste Richtung wirkt und die derart einstellbar ist, dass sie eine Bewegung des Spannarms in die zweite Richtung blockiert. Auf diese Weise kann sich die Feder bei Riemenlängungen ausdehnen und den Spannarm in die erste Richtung verstellen, wodurch dem Riemen noch eine Spannung zuteil wird, die sein Abspringen von einer oder von allen Riemenscheiben verhindert. Da die Feder als Druckfeder ausgebildet ist, sind Ermüdungserscheinungen an der Feder nicht zu befürchten. Bei Ermüdungserscheinungen am Zugmittel lässt sich die Feder wieder derart nachstellen, dass sie eine Bewegung des Spannarms in die zweite Richtung verhindert. Ein Hin- und Herspringen der Feder wird damit vermieden. Unliebsame Geräusche treten spätestens nach dem Nachstellen der Feder nicht mehr auf.

Nach einem weiteren Vorschlag der Erfindung wird eine Bewegung des Spannarms in die zweite und das Zugmittel entspannende Richtung dadurch in einfacher Weise vermieden, dass die Druckfeder derart eingestellt wird, dass sie in ihrer normalen Einsatzstellung vollständig zusammengedrückt ist, sich also in ihrer Blockstellung befindet, in der sie sich nur in die erste Verstellrichtung für den Spannarm ausdehnen kann, in der das Zugmittel gespannt wird.

Im einzelnen wird es als vorteilhaft bei einem Zugmittelgetriebe angesehen, bei dem die eine Bewegung des Spannarms in die zweite Richtung blockierenden Mittel einen Stangenteil und einen Stützteil aufweisen, dass die Druckfeder von dem Stangenteil aufgenommen ist, mit ihrem einen Ende gegen den Stangenteil und mit ihrem anderen Ende gegen den Stützteil wirkt, wobei der Stangenteil einenends an dem Spannarm bzw. an dem Arbeitsgerät angreift und der Stützteil an dem Arbeitsgerät bzw. an dem Spannarm vorgesehen ist. Damit ist entweder der Stützteil oder der Stangenteil ortsfest d. h. am Arbeitsgerät angeordnet. Die Feder sitzt auf dem Stangenteil auf und kann mit ihrem einen Ende leicht auf den Stangenteil wirken, wenn dieser mit einem entsprechenden Vorsprung, Anschlag, Sperrstift usw. versehen ist. Zweckmäßig ist der Stangenteil in dem Stützteil verstellbar.

Die Feder kann in besonders einfacher Weise nachgestellt werden, wenn ein Gewindeteil vorgesehen ist, der einenends gegen die Druckfeder anliegt, den Stangenteil verschiebbar aufnimmt und mit dem Stutzteil einstellbar verbunden ist. Sobald dann die Stellung des Gewindeteils gegenüber dem Stützteil verstellt wird, kann auch die Feder wieder auf Block gestellt werden. Vorteilhaft ist der Gewindeteil als Hülse mit Außengewinde ausgebildet, wobei die Verstellung leicht auszuführen ist, wenn entweder der Gewindeteil in den Stützteil einschraubbar oder der Gewindeteil mit zwei Muttern versehen ist, die auf dem Gewinde verstellbar und beiderseits des Stützteils zur Anlage bringbar sind.

Damit die Feder insbesondere bei einer Nachstellung leicht auf Block gestellt werden kann, ist nach der Erfindung ferner vorgesehen, dass in der eine Bewegung in die zweite Richtung blockierenden Stellung der Druckfeder eine Anzeige auf dem Stangenteil sichtbar wird. Sobald die Anzeige sichtbar ist, weiß die Bedienungsperson auch, dass eine sachgerechte Vorspannung erreicht ist und dass eine weitere Verstellung den Riemen überdehnen könnte.

Damit die Spannvorrichtung auch betriebssicher bleibt und insbesondere verhindert wird, dass der Stangenteil aus dem Gewindeteil austritt, wird schließlich vorgeschlagen, dass der aus dem Gewindeteil austretende Abschnitt des Stangenteils an seinem Ende mit einem Anschlag versehen ist.

In der Zeichnung ist ein nachfolgend näher erläutertes Ausführungsbeispiel der Erfindung dargestellt. Es zeigt:
- Fig. 1: ein Mähwerksgehäuse mit einem Zugmittelgetriebe
- Fig. 2: eine Spannvorrichtung für das Zugmittelgetriebe in perspektivischer Darstellung und
- Fig. 3: die Spannvorrichtung nach Fig. 2 in Seitenansicht.

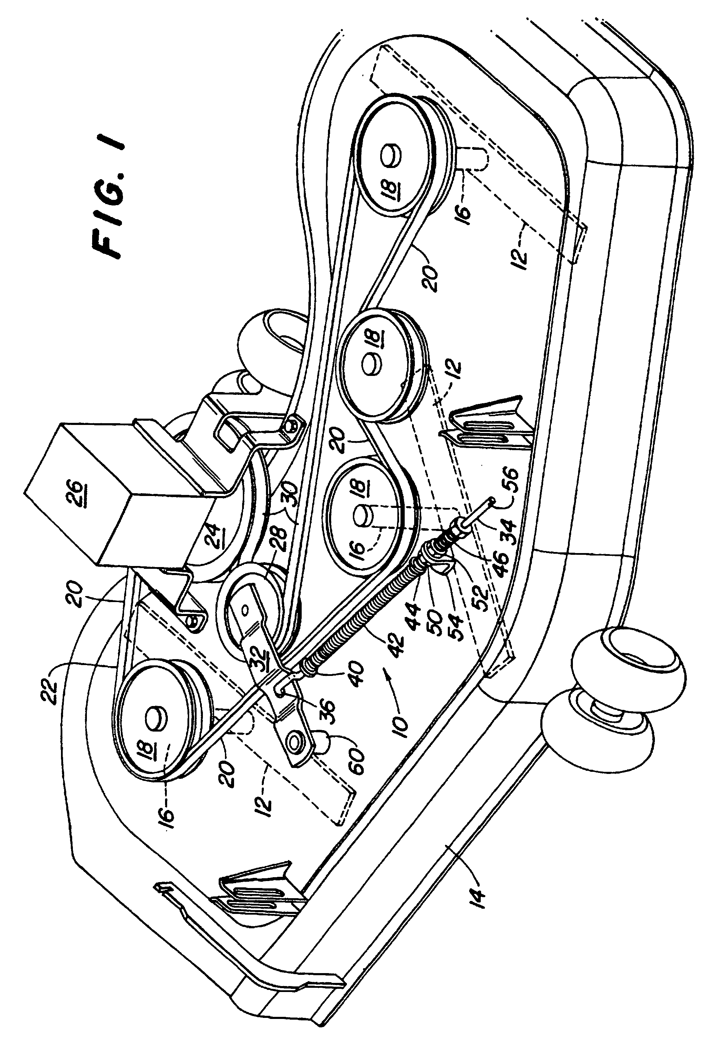

In der Zeichnung ist ein Ausführungsbeispiel mit der bevorzugten Spannvorrichtung 10 dargestellt. Sie kann bei einem Zugmittelgetriebe für einen Großflächenmäher mit beispielsweise drei Mähmessern Verwendung finden, aber im Prinzip auch bei jedem anderen Riemenantrieb. Beim bevorzugten Ausführungsbeispiel sind die Mähmesser mit 12 bezeichnet und rotieren im Einsatz in einem nach unten hin offenen Mähwerksgehäuse 14 um vertikale Achsen in Form von Spindeln 16, an denen sie befestigt sind. Die Spindeln ihrerseits sind in in der Zeichnung nicht gezeigten Spindelgehäusen gelagert, die mit dem Mähwerksgehäuse 14 verschraubt oder in anderer Weise befestigt sind. Zum Antrieb der Spindeln 16 dienen Riemenscheiben 18, die sich oben auf dem Mähwerksgehäuse 14 befinden und über einen ersten Abschnitt 20 eines Zugmittelgetriebes in Form eines Antriebsriemens 22 angetrieben werden. Der Antriebsriemen 22 selbst erhält seinen Antrieb über eine Antriebsscheibe 24, über die der Riemen mit Bezug auf Fig. 1 im Uhrzeigersinn antreibbar ist und die selbst mit einem Getriebe 26 in Antriebsverbindung steht. Das Getriebe wiederum wird von einer Kraftquelle an dem Fahrzeug, an dem das Mähwerksgehäuse aufgehängt ist, aus angetrieben. Auf diese Weise verläuft der Kraftfluss von der Kraftquelle am Fahrzeug über das Getriebe 26, die Antriebsriemenscheibe 24, die Antriebsriemen 22, die Riemenscheiben 18 und über die Spindeln 16 zu den Mähmessern 12. Im Bereich eines relativ schlaffen Abschnitts 30 des Antriebsriemens 22 ist eine Spannscheibe 24 vorgesehen, die zwecks Erzeugung einer richtigen Riemenspannung für den Antriebsriemen gegen diesen über mindestens eine Feder gedrückt wird. Aus Fig. 1 der Zeichnung ist erkennbar, dass die Spannscheibe 28 an dem Ende eines Spannarms 32 angeordnet ist, der seinerseits oben auf dem Mähwerksgehäuse 14 schwenkbar angelenkt ist.

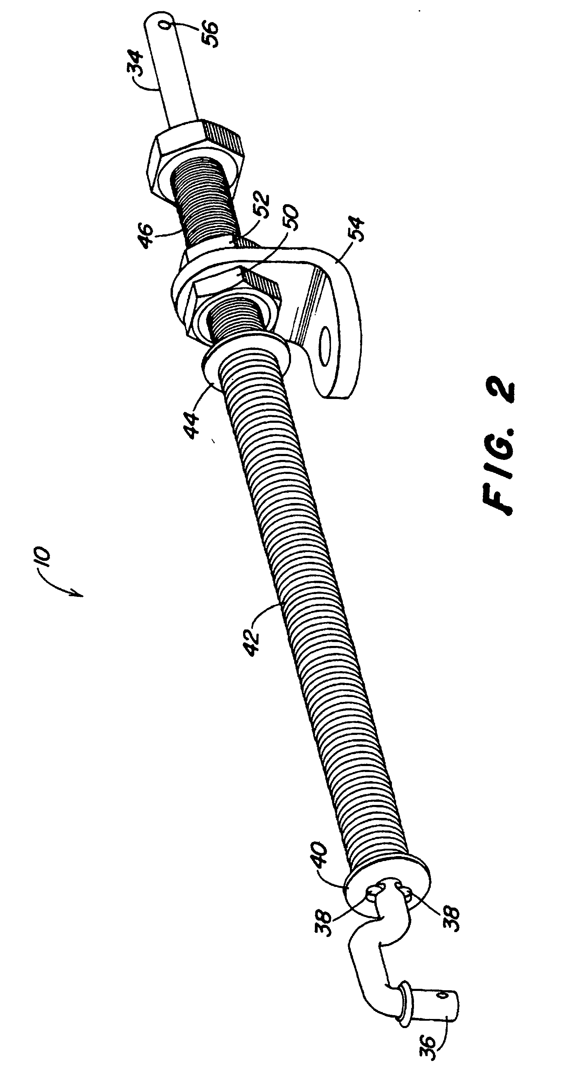

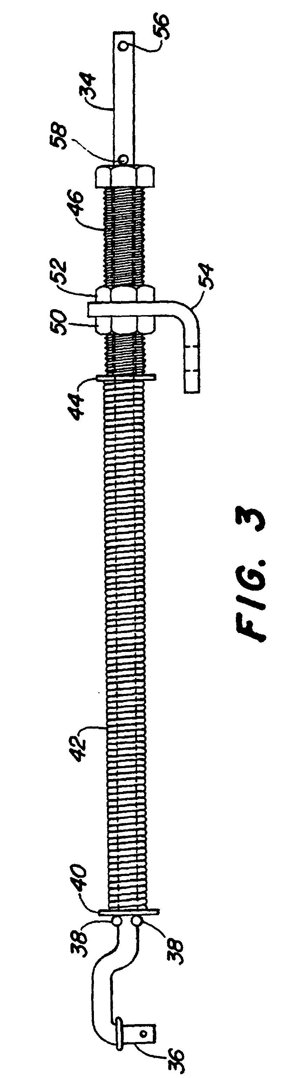

Wie ebenfalls noch aus Fig. 1 erkennbar ist, erstreckt sich die Spannvorrichtung 10 zwischen einem Stützpunkt auf dem Mähwerksgehäuse 14 und dem Spannarm 32 und wirkt auf den Spannarm derart, dass die Spannscheibe 28 gegen den Riemen 20 mit einer bestimmten Federkraft gedrückt wird. Im einzelnen besteht die Spannvorrichtung 10 aus einem Längsteil beispielsweise in Form einer Stange 34, deren frontseitiges Ende 36 nach unten abgebogen und in einer Öffnung im Spannarm 32 aufgenommen ist. Zwei in den Fig. 2 und 3 erkennbare Anschläge 38, Hakenteile odgl. sind an der Stange 34 derart vorgesehen, dass sie eine Schiebebewegung einer ersten Scheibe 40 mit Bezug auf Fig. 1 nach links begrenzen. Gegen die erste Scheibe 40 liegt eine Druckfeder 42 an, die ihrerseits auf die Stange 34 aufgesteckt ist. Eine zweite Scheibe 44 auf der Stange liegt gegen das andere Ende der Druckfeder 42 an und wird gegen die Druckfeder über einen Gewindeteil 46 in Form einer auf die Stange aufgesteckten Hülse mit Außengewinde gedrückt. Die Stange 34 ist innerhalb der Hülse verschiebbar, wohingegen der Gewindeteil 46 zwar gegenüber dem Mähwerksgehäuse 14 verstellbar ist, aber im Einsatz seine Position mit Bezug auf das Mähwerksgehäuse 14 nicht verändert. Hierzu dienen zwei Muttern 50 und 52, die auf das Gewinde der Hülse beiderseits eines Stützteils 54 aufschraubbar sind, der seinerseits auf dem Mähwerksgehäuse 14 ortsfest angeordnet ist. Wenn beide Muttern gegen die sich gegenüberliegenden Seiten des Stützteils anliegen, ist der Gewindeteil 46 in seiner Position festgelegt. Damit die Stange 34 nicht aus irgendeinem Grund aus dem Gewindeteil austreten kann, beispielsweise wenn nach einem an sich nicht vorgesehenen Abspringen des Antriebsriemens die Druckfeder entspannt, ist am Ende der Stange 34 ein sich durch die Stange erstreckender Steckstift 56 vorgesehen, der in einem solchen Fall gegen den Gewindeteil zur Anlage kommen kann und damit ein Auseinanderfallen der Spannvorrichtung verhindert. Eine Anzeige in Form einer Sichtöffnung 58 signalisiert einer Bedienungsperson das Erreichen der vorgesehenen Riemenspannung. Die Sichtöffnung befindet sich dann in der in Fig. 3 erkennbaren Stellung.

Zum Verstellen des Gewindeteils gegenüber dem Stützteil 54, der im Prinzip auch mit einem Gewindeloch versehen sein kann, dient ein Schraubenkopf an dem einen Ende der Hülse.

Es wurde bereits darauf hingewiesen, dass bei einem normalen Einsatz der Kraftfluss von der Kraftquelle am Fahrzeug zu den Mähmessern 12 über einen Riemenantrieb erfolgt. Das Getriebe 26 ist dabei über eine nicht dargestellte Antriebswelle an die Antriebsscheibe 24 angeschlossen. Die rotierende Antriebsscheibe 24 treibt den Riemen mit Bezug auf Fig. 1 im Uhrzeigersinn an. Gleichfalls werden die Riemenscheiben 18 von dem Riemen im Uhrzeigersinn angetrieben. Die Spindeln 16 laufen mit den Riemenscheiben um und treiben die Mähmesser 12 entsprechend an, damit diese das Gras odgl. mähen können.

Die Spannscheibe 28 wird über die Feder gegen den Riemen gedrückt und verleiht damit dem Riemen die für einen normalen Einsatz erforderliche Riemenspannung. Die über die Spannscheibe 28 auf den Riemen ausgeübte Spannkraft unterstützt den Riemen darin, dass er stets einen derart guten Kontakt mit den Riemenscheiben hat, dass ein Durchrutschen des Riemens bei einem normalen Einsatz weitgehend vermieden wird. Gleichfalls bewirkt die Riemenspannung, dass der Riemen nicht von den Riemenscheiben abspringt.

Die Spannscheibe 28 ist derart angeordnet, dass sie den Riemen in einem Bereich 30 spannt, der sonst relativ schlaff sein würde. Über die Antriebsscheibe 24 wird der Riemen im Uhrzeigersinn gezogen. Da der Riemen nicht starr sondern flexibel ist, kann die Antriebsscheibe 24 den Riemen 22 in seinem zweiten Bereich 30 nicht schieben oder drücken. Der erste Abschnitt 20 des Riemens 22 wird daher durch die Antriebsscheibe 24 straff gehalten, während der zweite Abschnitt 30 des Riemens relativ schlaff gehalten ist. Da aber die Spannscheibe 28 an dem relativ schlaffen zweiten Abschnitt 30 des Riemens 20 angreift, muss nur eine relativ kleine Kraft aufgewendet werden, um die dort herrschende Spannungslosigkeit zu überwinden und um eine richtige Spannung anzulegen. Würde dagegen die Spannscheibe 28 an dem relativ straffen Abschnitt 20 des Riemens 22 angreifen, dann müsste eine größere Kraft aufgewendet werden, um die Spannungslosigkeit in dem zweiten Abschnitt 30 des Riemens 22 zu überwinden bzw. um dem Antriebsriemen die erforderliche Spannung zu verleihen.

Die Spannvorrichtung 10 übt auf den Spannarm eine Kraft aus und bewirkt damit, dass die Spannscheibe 28 gegen den Antriebsriemen 22 gedrückt wird, um dem Riemen in diesem Bereich seine Spannungslosigkeit zu nehmen und um dem Riemen entsprechend ausreichend spannen zu können. Die Kompressionsfeder 42 erstreckt sich zwischen den beiden Scheiben 40 und 44 und wirkt auf beide. Die zweite Scheibe 44 wird gegen den Gewindeteil 46 gedrückt, der die erste Mutter 50 gegen den Stützteil 54 drückt. Andererseits ist der Stützteil 54 mit der Oberseite des Mähwerksgehäuses fest verbunden und ist damit eine solide d. h. ortsfeste Stütze, gegen die die Druckfeder 42 drückt. Die Druckfeder 42 wirkt aber auch auf die erste Scheibe 40, die ihrerseits an der der Druckfeder abgelegenen Seite gegen die Anschläge 38 an der Stange 34 anliegt. Auf diese Weise drückt die Kompressionsfeder 42 natürlich auch gegen die Stange 34 und will diese mit Bezug auf Fig. 1 nach links verschieben. Da die Stange 34 an dem Spannarm 32 angreift, will sich dann der Spannarm 32 um seinen Schwenkanschluß 60 mit Bezug auf Fig. 1 entgegen dem Uhrzeigersinn verstellen. Letztlich wird damit auf die Spannscheibe eine Kraft ausgeübt, die die Spannscheibe fest gegen den Antriebsriemen 22 drückt.

Während des normalen Mäheinsatzes soll die Spannvorrichtung 10 derart eingestellt sein, dass die Druckfeder 42 zwischen den beiden Scheiben 40 und 44 vollständig zusammengedrückt ist. Bei auftretenden Ermüdungserscheinungen, die zu einer Riemenlängung führen, kann die Druckfeder sich dann entsprechend entspannen bzw. ausdehnen, so dass die Spannscheibe 28 wieder gegen den Antriebsriemen 22 gedrückt wird, damit dieser wieder seine erforderliche Spannung erhält. Da sich aber andererseits die Druckfeder bei einem normalen Einsatz immer in ihrer Blockstellung, in der sie vollständig zusammengepresst ist, befindet, wirkt die Spannvorrichtung für eine Bewegung im Uhrzeigersinn nach Fig. 1 - also in einer Richtung, die von dem Antriebsriemen 22 wegführt - als ein Anschlag oder starre Stange, die eine Bewegung in einer solchen Richtung blockiert. Eine Bewegung in eine solche Richtung kann an sich auftreten, wenn ein Mähmesser gegen ein Hindernis stößt oder wenn bei einem Abschalten des Motors die Antriebsscheibe zusätzlich gegen Nachlaufen abgebremst wird. In solchen Fällen wird der Antriebsriemen mit einer zusätzlichen Spannkraft belastet, die den Spannarm mit Bezug auf Fig. 1 im Uhrzeigersinn verstellen will. Ein derartige Verstellung wird aber durch die Spannvorrichtung 10 verhindert, wie nachfolgend noch näher ausgeführt wird.

Während des Mäheinsatzes kann es vorkommen, dass ein Mähmesser 12 gegen ein Hindernis, wie einen Stein stößt mit der Folge, dass die Umlaufgeschwindigkeit dieses Mähmessers momentan herabgesetzt wird. In Einzelfällen kann das Messer sogar zum Stillstand kommen. Dies wiederum kann bewirken, dass die an der Spindel 16 angreifende Riemenscheibe den Antriebsriemen momentan abbremst oder sogar stoppt, während die anderen Messer weiter umlaufen. Die weiter umlaufenden Mähmesser erzeugen dann aber eine Antriebskraft für den Riemen, so dass bei einem derart momentan angetriebenen Riemen die Riemenscheiben 18 in einem ziehenden Sinn auf den zweiten Abschnitt 30 des Riemens wirken. Damit wird diesem Abschnitt eine zusätzliche Spannung zuteil, die die Spannscheibe aus ihrer Stellung nach Fig. 1 nach rechts verstellen bzw. ziehen will. Da aber die Druckfeder auf Block steht, wirkt die Spannvorrichtung 10 dann als eine starre Vorrichtung und blokkiert eine Spannscheiben-Bewegung in diese Richtung. Die Spannvorrichtung verhindert damit eine Verstellung der Spannscheibe 28 von dem Antriebsriemen fort und damit ein Peitschen des Riemens, was zu einem Lösen des Riemens von der Antriebsscheibe oder einer bzw. allen Riemenscheiben führen könnte. Da die Druckfeder in einem solchen Fall bereits vollständig zusammengepresst ist, treten bei zusätzlichen Spannungen auch keine lauten Geräusche, insbesondere knallartigen Geräusche auf.

Es wurde bereits darauf hingewiesen, dass der Riemen zusätzlich gespannt wird, wenn die Antriebsscheibe 24 abgebremst wird. Dies soll aus Sicherheitsgründen immer dann erfolgen, wenn der Fahrer aus irgendeinem Grund seinen Fahrerplatz auf dem Fahrzeug verlässt. In einem solchen Fall sollen die Mähmesser sofort abgebremst werden, da verhindert werden muss, dass der Fahrer von einem der Messer gefährdet werden kann. Wird die Bremse an die Antriebsscheibe angelegt, dann können die dann noch umlaufenden Mähmesser bzw. Riemenscheiben bewirken, dass der Riemen für eine kurze Zeit noch eine Antriebskraft erhält. In einem solchen Fall ziehen die Riemenscheiben 18 an dem zweiten Abschnitt 30 des Riemens 22, so dass dieser in seinem zweiten Abschnitt 30 einer erhöhten Spannung ausgesetzt ist. Auch in diesem Fall will die erhöhte Spannung die Antriebsscheibe aus ihrer Stellung in Fig. 1 nach rechts ziehen, was wiederum durch die vollständig auf Block gefahrene Druckfeder 42 verhindert wird. Ein Peitschen des Riemens oder gar ein Lösen des Riemens von einer der Scheiben wird ebenfalls vermieden. Die Messer werden schnell zu einem Stillstand kommen, wenn die Reibung zwischen dem Riemen 22 und der stillstehenden Antriebsscheibe größer wird als das von den Messern herrührende Moment.

Bei einer richtigen Einstellung wird durch die Spannvorrichtung 10 eine Vorspannung erzeugt, die ausreichend groß ist, um den Antriebsriemen 22 mit seinen Riemenscheiben 18, 24 und 28 in Kontakt zu halten, ohne dass bei einem normalen Einsatz Schlupf auftritt. Wenn nun ein Mähmesser gegen ein Hindernis stößt, bzw. ein solches streift oder wenn die Bremse an die Antriebsscheibe 24 angelegt wird, dann wird bei vollständig zusammengedrückter Druckfeder 42 der Antriebsriemen 22 mit Bezug auf die entsprechenden Scheiben durchrutschen, so dass das aus Riemen und Riemenscheiben bestehende Antriebssystem nicht beschädigt wird. Die Spannvorrichtung 10 spannt den Antriebsriemen 22 derart vor, dass die Reibung zwischen den Antriebsriemen und den Riemenscheiben groß genug ist, um im normalen Einsatz Schlupf zu vermeiden, und andererseits nicht so groß ist, dass der Riemen bei einem Auftreffen eines Messers auf ein Hindernis nicht durchrutschen könnte.

Die Spannvorrichtung 10 kann aber auch noch von einer Bedienungsperson ein- bzw. nachgestellt werden, so dass stets die vorgegebene Vorspannung herrscht. Eine Nachstellung wird beispielsweise empfohlen, wenn sich der Antriebsriemen nach einer langen Einsatzzeit gedehnt hat. In einem solchen Fall tritt Schlupf auf, der durch die sich dann etwas entspannende Druckfeder 42 aufgefangen wird. Sobald sich aber die Druckfeder entspannt, wird sie auf den Antriebsriemen eine geringere Vorspannung als die empfohlene ausüben, weshalb eine Nachstellung der Spannvorrichtung erforderlich wird. Um nun die Spannvorrichtung neu einstellen zu können, werden die beiden Muttern 50 und 52 auf dem Gewindeteil 46 derart verstellt, dass der Gewindeteil 46 in der Öffnung des Stützteils 54, der mit dem Mähwerksgehäuse 14 fest verbunden ist, verstellt werden kann, und zwar aus seiner Stellung in Fig. 1 nach links. Hierdurch wiederum drückt der Gewindeteil 46 und die zweite Scheibe 44 die Druckfeder 42 ebenfalls nach links. Bei der Verstellung des rechten Endes der Druckfeder 42 nach links wird die Druckfeder schließlich wieder auf Block gehen, so dass eine größere Kraft auf den Antriebsriemen über die Stange 34, den Spannarm 32 und die Spannscheibe 28 ausgeübt wird.

Schließlich ist an der Stange 34 noch eine Anzeige beispielsweise in Form einer Öffnung 58 vorgesehen, die der Bedienungsperson sichtbar anzeigt, wenn die richtige Vorspannung erreicht ist. Bei einem Einstellen der Spannung verstellt sich die Stange 34 gegenüber dem Gewindeteil 46, wobei die Stellung der Anzeigeöffnung derart gewählt ist, dass diese gerade noch an dem rechten Ende des Gewindeteils wieder sichtbar ist, wenn die richtige Vorspannung am Antriebsriemen erreicht ist. Diese Stellung ist in Fig. 3 gezeigt. Zum Auffinden der richtigen Vorspannung muss die Bedienungsperson damit den Gewindeteil solange drehen, wobei er sich nach links verstellt, bis die Anzeigeöffnung wieder sichtbar ist. Sobald die Bedienungsperson die Öffnung sieht, weiß sie, dass die richtigen Vorspannung erreicht ist.

Die richtige Vorspannung ist bei dem bevorzugten Ausführungsbeispiel nur erreichbar, wenn die Druckfeder vollständig zusammengedrückt ist. Ist die Vorspannung geringer als empfohlen, dann ist die Anzeigeöffnung 58 nicht mehr sichtbar, weil sich dann die Stange 34 in dem Gewindeteil nach links verstellt hat. Dies ist möglich, weil bei sich dehnendem Antriebsriemen sich die Druckfeder im entsprechenden Maß entspannt, dabei aber eine geringere Kraft auf den Riemen ausübt. Ist die Vorspannung zu gering, so sollte die Spannvorrichtung 10 in der vorstehend beschriebenen Art und Weise nachgestellt werden. Jedoch sollte die Verstellung des Gewindeteils 46 sofort eingestellt werden, wenn die Anzeigeöffnung 58 wieder sichtbar wird. Sollte dies nicht erfolgen, dann würde bei einem weiteren Verstellen des Gewindeteils nach links die auf Block stehende Druckfeder 42 und die Stange 34 den Spannarm 32 weiter entgegen dem Uhrzeigersinn verschwenken, wodurch die Vorspannung des Antriebsriemens über den empfohlenen Wert steigen würde. Eine Überdehnung des Riemens könnte die Folge sein. Die Bedienungsperson sollte daher den Nachstellvorgang sofort beenden, sobald die Anzeigeöffnung sichtbar wird.

Bei dem bevorzugten Ausführungsbeispiel dient die Anzeige zum Auffinden der richtigen Vorspannung, nachdem sich nach einer längeren Einsatzzeit der Antriebsriemen 22 gedehnt hat. Der Stangenteil 34 dient als eine Einrichtung, mit der die Länge der Druckfeder 42 geortet werden kann. Bei richtiger Einstellung ist die Anzeigeöffnung 58 am rechten Ende des Gewindeteils 46 gerade sichtbar. Bei einer Riemenlängung verstellt sich die Spannscheibe 28 aus ihrer Stellung in Fig. 1 nach links. All dies erfolgt über die Druckfeder 42. Auch die Stange 34 wird mit nach links verstellt. Mit Bezug auf Fig. 3 bedeutet dies, dass auch die Anzeigeöffnung 58 mit nach links verstellt wird und dann in dem Gewindeteil 46 verschwindet bzw. durch diesen abgedeckt wird, während der Stützteil 54 in seiner Stellung verbleibt. Sobald die Anzeigeöffnung 58 nicht mehr sichtbar ist, sollte die Spannvorrichtung 10 wieder nachgestellt werden. Sie ist richtig nachgestellt, sobald die Anzeigeöffnung wieder sichtbar wird. Da der Stangenteil 34 sich zusammen mit dem Spannarm 32 und der Spannscheibe 28 bei einer Längendehnung des Antriebsriemens mit verstellt, kann über ihn immer die richtige Länge der Spannvorrichtung aufgefunden werden, auch wenn eine Riemenlängung infolge von Ermüdung usw. eingetreten ist.

Es wurde bereits mehrfach darauf verwiesen, dass bei einem normalen Einsatz die Druckfeder 42 der Spanneinrichtung immer ganz zusammengedrückt ist. Bei Vibrationen usw. kann sich die Feder kurzfristig leicht ausdehnen. Wenn aber die Spannscheibe 28 in ihre Ausgangsstellung zurückspringt, ist die Druckfeder wieder auf Block und wirkt als Rückstop, der die Druckfeder daran hindert, zwischen ihrer vollständig gespannten und einer etwas entspannten Stellung hin und her zu springen. Zumindest wird eine derartige Bewegung gedämpft. Des Weiteren wird auch die Reibung zwischen der Druckfeder 42 und der Stange 34 dämpfend wirken, wenn während des Einsatzes Riemenvibrationen auftreten.

Eine Verstellung des Gewindeteils 46 relativ zu dem Stützteil 54 kann auch durch entsprechende Betätigung der Muttern 50 und 52 erfolgen. Auf die Muttern kann eventuell verzichtet werden, wenn das Durchgangsloch im Stützteil 54 mit Innengewinde versehen ist. Andererseits ist es im Rahmen der Erfindung auch möglich, dass das abgebogene Ende 36 des Stangenteils 34 mit dem Mähwerksgehäuse 14 oder mit dem Stützteil 54 verbindbar ist. In einem solchen Fall ist dann der Gewindeteil 42 an dem Spannarm 32 vorzusehen. Die beiden Muttern 50 und 52 würden dann in ähnlicher Art wirken, wie bei der Ausführung nach den Fig. 1 bis 3. Auch in diesem Fall ist die Druckfeder bei einem normalen Einsatz vollständig zusammengedrückt. Gleichfalls ist es möglich, dass der Stützteil in das Mähwerksgehäuse integriert ist.

## Patentansprüche

1. Zugmittelgetriebe für ein Arbeitsgerät, insbesondere für einen an ein Fahrzeug anschließbaren Rasenmäher, mit wenigstens einem endlosen Zugmittel (22) zum Antrieb mindestens eines Arbeitswerkzeugs, einer Antriebsriemenscheibe (24), mindestens einer jeweils einem Arbeitswerkzeug zugeordneten Riemenscheibe (18) und mit einer Spannscheibe (28), die an einem Spannarm (32) vorgesehen ist, der derart schwenkbar gelagert ist, dass er in eine erste Richtung, in der das Zugmittel (22) spannbar ist, und in eine zweite Richtung verschwenkbar ist, in der das Zugmittel (22) entspannbar ist, und mit einer Druckfeder (42), deren Rückstellkraft in die erste Richtung wirkt, **dadurch gekennzeichnet, dass** die Druckfeder (42) im Einsatz derart eingestellt ist, dass sie eine Bewegung des Spannarms (32) in die zweite Richtung zumindest im wesentlichen blockiert

2. Zugmittelgetriebe nach Anspruch 1, wobei die eine Bewegung des Spannarms (32) in die zweite Richtung blockierenden Mittel einen Stangenteil (34) und einen Stützteil (54) aufweisen, **dadurch gekennzeichnet, dass** die Druckfeder (42) von dem Stangenteil (34) aufgenommen ist, mit ihrem einen Ende gegen den Stangenteil (34) und mit ihrem anderen Ende gegen den Stützteil (54) wirkt, wobei der Stangenteil (34) einenends an dem Spannarm (32) bzw. an dem Arbeitsgerät (Mähwerksgehäuse 14) angreift und der Stützteil (54) an dem Arbeitsgerät (Mähwerksgehäuse 14) bzw. an dem Spannarm (32) vorgesehen ist.

3. Zugmittelgetriebe nach Anspruch 2, **dadurch gekennzeichnet, dass** der Stangenteil (34) in dem Stützteil (54) verstellbar ist.

4. Zugmittelgetriebe nach einem oder mehreren der vorherigen Ansprüche, **gekennzeichnet durch** einen Gewindeteil (46), der einenends gegen die Druckfeder (42) anliegt, den Stangenteil (34) verschiebbar aufnimmt und mit dem Stützteil (54) einstellbar verbunden ist.

5. Zugmittelgetriebe nach Anspruch 4, **dadurch gekennzeichnet, dass** der Gewindeteil (46) als Hülse mit Außengewinde ausgebildet ist.

6. Zugmittelgetriebe nach Anspruch 5, **dadurch gekennzeichnet, dass** der Gewindeteil (46) in den Stützteil (54) einschraubbar ist.

7. Zugmittelgetriebe nach Anspruch 5, **dadurch gekennzeichnet, dass** der Gewindeteil (46) mit zwei Muttern (50, 52) versehen ist, die auf dem Gewinde verstellbar und beiderseits des Stützteils (54) zur Anlage bringbar sind.

8. Zugmittelgetriebe nach einem oder mehreren der vorherigen Ansprüche, **dadurch gekennzeichnet, dass** in der eine Bewegung in die zweite Richtung blockierenden Stellung der Druckfeder (42) eine Anzeige (58) auf dem Stangenteil (34) sichtbar wird.

9. Zugmittelgetriebe nach Anspruch 1, **dadurch gekennzeichnet, dass** die Druckfeder (42) in ihrer eine Bewegung in die zweite Richtung blockierenden Stellung vollständig zusammengedrückt ist.

10. Zugmittelgetriebe nach einem oder mehreren der vorherigen Ansprüche, **dadurch gekennzeichnet, dass** der aus dem Gewindeteil (46) austretende Abschnitt des Stangenteils (34) an seinem Ende mit einem Anschlag versehen ist.

## Claims

1. A belt drive for an implement, especially for a lawnmower attachable to a vehicle, with at least one endless belt means (22) for driving at least one implement tool, a belt drive pulley (24), at least one belt pulley (18) associated in each case with an implement tool and a tensioning pulley (28) which is provided on a tensioning arm (32), which is mounted pivotally in such a way that it can be pivoted in a first direction in which the belt means (22) can be tensioned and in a second direction in which the belt means (22) can be relieved of tension, and with a compression spring (42) whose restoring force acts in the first direction, **characterized in that** the compression spring (42) is in use so arranged that it at least substantially blocks movement of the tensioning arm (32) in the second direction.

2. A belt drive according to claim 1, wherein means blocking movement of the tensioning arm (32) in the second direction comprise a rod part (34) and a support part (54), **characterized in that** the compression spring (42) is received by the rod part (34), acts with its one end against the rod part (34) and with its other end against the support part (54), wherein the rod part (34) engages at one end on the tensioning arm (32) or on the implement (mower housing 14) and the support part (54) is provided on the implement (mower housing 14) or the tensioning arm (32) respectively.

3. A belt drive according to claim 2, **characterized in that** the rod part (34) is adjustable in the support part (54).

4. A belt drive according to one or more of the preceding claims, **characterized by** a threaded part (46) which bears at one end against the compression spring (42), receives the rod part (34) slidably and is adjustably connected to the support part (54).

5. A belt drive according to claim 4, **characterized in that** the threaded part (46) is in the form of a sleeve with an external thread.

6. A belt drive according to claim 5, **characterized in that** the threaded part (46) can be screwed into the support part (54).

7. A belt drive according to claim 5, **characterized in that** the threaded part (46) is provided with two nuts (50, 52) which are adjustable on the thread and can be brought into engagement with the two sides of the support part (54).

8. A belt drive according to one or more of the preceding claims, **characterized in that** an indicator (58) is visible on the rod part (34) in the position of the compression spring (42) blocking movement in the second direction.

9. A belt drive according to claim 1, **characterized in that** the compression spring (42) is fully compressed together in its position blocking movement in the second direction.

10. A belt drive according to one or more of the preceding claims, **characterized in that** the section of the rod part (34) extending out of the threaded part (48) is provided with a stop on its end.

## Revendications

1. Transmission avec mécanisme de traction pour un instrument de travail, en particulier pour une tondeuse à gazon raccordable à un véhicule, avec au moins un mécanisme de traction sans fin (22) pour l'entraînement d'au moins un outil de travail, une poulie de transmission (24), au moins une poulie (18) affectée à un outil de travail et avec une poulie tendeuse (28) qui est prévue sur un bras de serrage (32) qui est logé pour pouvoir pivoter de manière à pouvoir être tendu dans une première direction dans laquelle le mécanisme de traction (22) peut être tendu et à pivoter dans une deuxième direction dans laquelle le mécanisme de traction (22) peut être détendu, et avec un ressort à pression (42) dont la force de rappel agit dans la première direction, **caractérisé en ce que** le ressort à pression (42) est réglé de telle manière pendant le fonctionnement qu'il bloque un mouvement du bras de serrage (32) au moins essentiellement dans la deuxième direction.

2. Transmission avec mécanisme de traction selon la revendication 1, dans lequel un mécanisme bloquant un mouvement du bras de serrage (32) dans la deuxième direction comportent une partie en forme de tige (34) et une partie support (54), **caractérisé en ce que** le ressort à pression (42) est tenu par la partie en forme de tige (34), **en ce qu'**il exerce une action antagoniste sur la partie en forme de tige (34) avec l'une de ses extrémités et sur la partie support (54) avec son autre extrémité, la partie en forme de tige (34) s'insérant à une extrémité dans le bras de serrage (32) ou dans l'instrument de travail (capot de tondeuse à gazon 14) et la partie support (54) étant prévue sur l'instrument de travail (capot de tondeuse à gazon 14)ou sur le bras de serrage (32).

3. Transmission avec mécanisme de traction selon la revendication 2, **caractérisé en ce que** la partie en forme de tige (34) peut être déplacée dans la partie support (54).

4. Transmission avec mécanisme de traction selon une ou plusieurs des revendications précédentes, **caractérisé par** une partie filetée (46) qui, à une extrémité, est adjacente au ressort de pression (42), dans laquelle est logée la partie en forme de tige (34) de manière coulissante et qui est reliée avec la partie support (54) de manière orientable.

5. Transmission avec mécanisme de traction selon la revendication 4, **caractérisé en ce que** la partie filetée (46) est formée comme une douille avec un filetage mâle.

6. Transmission avec mécanisme de traction selon la revendication 5, **caractérisé en ce que** la partie filetée (46) peut être vissée dans la partie support (54).

7. Transmission avec mécanisme de traction selon la revendication 5, **caractérisé en ce que** la partie filetée (46) est munie de deux écrous (50, 52) qui peuvent être déplacés sur le filetage et mis en appui de chaque côté de la partie support (54).

8. Transmission avec mécanisme de traction selon une ou plusieurs des revendications précédentes, **caractérisé en ce que**, dans la position du ressort de pression (42) bloquant un mouvement dans la deuxième direction, une indication (58) est visible sur la partie en forme de tige (34).

9. Transmission avec mécanisme de traction selon la revendication 1, **caractérisé en ce que** le ressort de pression (42) est entièrement comprimé dans sa position de blocage d'un mouvement dans la deuxième direction.

10. Transmission avec mécanisme de traction selon une ou plusieurs des revendications précédentes, **caractérisé en ce que** la portion sortant de la partie filetée (46) de la partie en forme de tige (34) est munie d'une butée à son extrémité.
